# EUROPEAN PATENT APPLICATION

(11) **EP 1 524 097 A1**
(43) Date of publication of application: **20.04.2005**
(21) Application number: 04021238.3
(22) Date of filing: 07.09.2004
(51) Int. Cl.: B29C 65/16, B29C 65/48

(54) **Resin mold and method for manufacturing the same**

(30) Priority: 14.10.2003 JP 2003354245
(71) Applicant: DENSO CORPORATION, Kariya-city, Aichi-pref. 448-8661 (JP)
(72) Inventor: Watanabe, Tatsuya, Kariya-city Aichi-pref, 448-8661 (JP); Kawamoto, Yasunori, Kariya-city Aichi-pref, 448-8661 (JP); Kawanishi, Fumio, Kariya-city Aichi-pref, 448-8661 (JP); Iwai, Yozo, Kariya-city Aichi-pref, 448-8661 (JP)
(74) Representative: KUHNEN & WACKER

(57) **Abstract**

A method for manufacturing a resin mold includes the steps of: laminating a second resin member (2), a filling member (3) and a first resin member (1) in this order; and irradiating with the laser beam (43) from a first resin member (1) side so that the first resin member (1) and the second resin member (2) are welded. The first resin member (1) is capable of transmitting a laser beam (43). The laser beam (43) works as a heat source. The second resin member (2) is capable of absorbing the laser beam (43). The filling member (3) fills a clearance (9) between the first and second resin members (1, 2) when the first and second resin members (1, 2) are attached. Thus, the method provides the resin mold (7) without a defect such as a void.

## Description

The present invention relates to a resin mold manufactured by welding with using a laser beam and a method for manufacturing the same.

A laser beam welding method is used for a bonding between resin members. The method is, for example, disclosed in Japanese Patent Application Publications No. 2001-105500, No. 2001-71384, and No. S60-214931 (which corresponds to U.S. Patent No. 4,636,609).

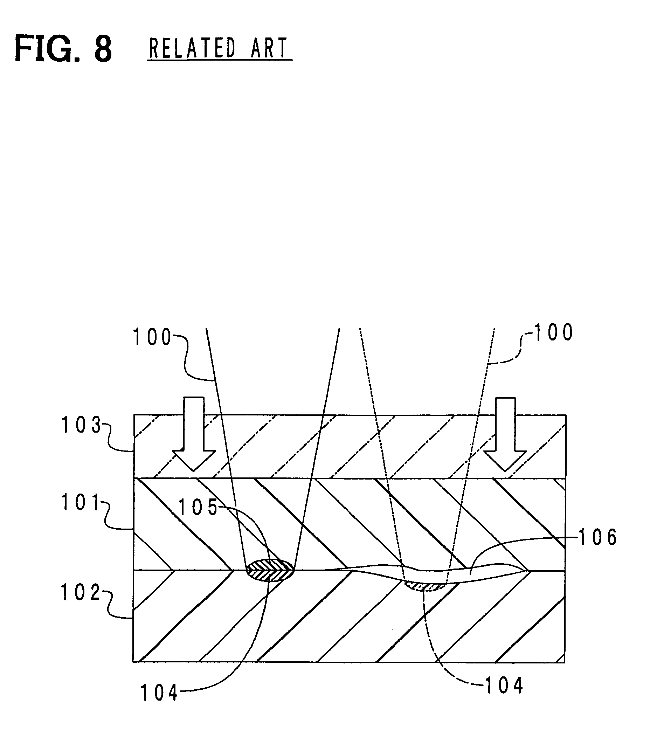

Fig. 8 is a schematic view explaining a method for manufacturing a resin mold by using a conventional laser beam welding method. In the laser beam welding method, firstly, the first resin member 101 and the second resin member 102 are laminated. The first resin member 101 is capable of transmitting a laser beam 100. The second resin member is capable of absorbing the laser beam 100. Next, the laser beam 100 is irradiated from a first resin member 101 side. The irradiated laser beam 100 transmits through the first resin member 100, and reaches the second resin member 102. The second resin member 102 absorbs energy of the laser beam 100. The second resin member 102 is heated and melted by the absorbed energy so that a melt region 104 is formed. The heat generated in the second resin member 102 conducts the first resin member 101. The first resin member 101 is also melted by the conducted heat so that another melt region 105 is formed. Thus, the melt regions 104, 105 of the first and second resin members 101, 102 are mutually diffused so that high bonding strength is obtained by using the laser beam welding method. Accordingly, the laser beam welding method is used widely, for example, for manufacturing a resin mold such as a part of an automotive vehicle.

As described above, heat conduction from the second resin member 102 to the first resin member 101 is performed through an interface between the first and second resin members 101, 102. Therefore, it is required to contact tightly between the first and second resin members 101, 102 when they are welded. In view of this point, in the prior art, the first resin member 101 is pressed toward the second resin member 102 by using a glass plate 103.

However, when the first or second resin member 101, 102 is preliminary formed, the first or second resin member 101, 102 may have a forming defect such as warpage or shrinkage. Further, the interface between the first and second resin members 101, 102 may not have flatness so that the interface has an irregular shape such as a rounded surface. Therefore, even when the first resin member 101 is pressed by the glass plate 103, a clamp or the like, it is difficult to contact the first resin member 101 with the second resin member 102 completely when the first and second resin members 101, 102 are welded. Accordingly, a clearance 106 is formed between the first and second resin members 101, 102. As shown by a dotted line in Fig. 8, when the clearance 106 is disposed between the first and second resin members 101, 102, the heat conduction from the second resin member 102 to the first resin member 101 is not sufficiently performed. Therefore, the bonding strength of a part of the interface, at which the clearance 106 is disposed, is reduced.

Further, when the clearance is disposed, air may penetrate into the clearance 106 from the outside. Furthermore, expanded resin, which is expanded by melting, may penetrate into the clearance 106. Thus, a defect such as a void may be generated in the resin mold after the resin mold is formed by welding.

Here, it is considered that forming accuracy is improved to eliminate the clearance 106. However, the improvement of the forming accuracy causes to increase a manufacturing cost, for example, to increase a cost of forming a mold. Further, it is considered that an applying pressure of the glass plate 103 becomes larger. However, when the applying pressure becomes larger, a defect caused by the applying pressure may be generated in the resin mold after welding.

In view of the above problem, it is an object of the present invention to provide a method for manufacturing a resin mold, the method capable of filling a clearance. Further, it is another object of the present invention to provide a resin mold, in which a defect such as a void is prevented from being generated.

A method for manufacturing a resin mold includes the steps of: laminating a second resin member, a filling member and a first resin member in this order; and irradiating with the laser beam from a first resin member side so that the first resin member and the second resin member are welded. The first resin member is capable of transmitting a laser beam. The laser beam works as a heat source. The second resin member is capable of absorbing the laser beam. The filling member fills a clearance between the first and second resin members when the first and second members are attached.

The method provides the resin mold without a defect such as a void. Thus, the high bonding strength between the first and second resin members is obtained.

Further, a resin mold includes: a first resin member capable of transmitting a laser beam, wherein the laser beam works as a heat source; a second resin member capable of absorbing the laser beam; and a filling member for filling a clearance between the first and second resin members. At least the first resin member and the second resin member are welded by the laser beam.

The resin mold has no defect such as a void. Thus, the high bonding strength between the first and second resin members is obtained.

The above and other objects, features and advantages of the present invention will become more apparent from the following detailed description made with reference to the accompanying drawings. In the drawings:
Fig. 1 is a schematic view explaining a part mounting process in a method for manufacturing a resin mold according to a preferred embodiment of the present invention;
Figs. 2A to 2C are schematic cross sectional views showing parts in the part mounting process, according to the preferred embodiment;
Fig. 3 is a schematic view showing laser equipment used in a laser beam irradiation process, according to the preferred embodiment;
Fig. 4 is a schematic view showing a portion, which is irradiated with a laser beam in the laser beam irradiation process, according to the preferred embodiment;
Fig. 5 is a schematic cross sectional view showing an intermediate in a scanning direction before heat is conducted to the intermediate in the laser beam irradiation process, according to the preferred embodiment;
Fig. 6 is a schematic cross sectional view showing an intermediate in a scanning direction after heat is conducted to the intermediate in the laser beam irradiation process, according to the preferred embodiment;
Fig. 7 is a schematic cross sectional view showing the resin mold according to the preferred embodiment; and
Fig. 8 is a schematic view explaining a method for manufacturing a resin mold according to a prior art.

A method for manufacturing a resin mold according to a preferred embodiment of the present invention includes the steps of: laminating and disposing a second resin member, a filling member and a first resin member in this order, and irradiating with a laser beam from a first resin member side so that at least the first resin member and the second resin member are welded. The first resin member is capable of transmitting a laser beam. The laser beam works as a heat source. The second resin member is capable of absorbing the laser beam. The filling member fills a clearance between the first and second resin members when the first and second members are attached.

Specifically, in the method for manufacturing the resin mold, firstly, the second resin member, the filling member and the first resin member are laminated and disposed in this order. Then, the laser beam is irradiated from the first resin member side. Therefore, the preferred embodiment is not to eliminate the clearance itself disposed between the first and second resin members by increasing forming accuracy or by increasing an applying pressure. The preferred embodiment is to fill the clearance with the filling member although the clearance exists between the first and second resin members.

In the method for manufacturing the resin mold, the clearance is filled with the filling member in a part mounting process. Therefore, the air is prevented from penetrating into the clearance from the outside. Further, since the clearance is filled with the filling member, the expanded and melted resin is prevented from penetrating into the clearance. Thus, no defect such as a void is generated in the resin mold after the resin mold is formed by welding.

The method permits to form the clearance. Even if the clearance is disposed between the first and second resin members, the resin mold has no defect. Therefore, it is no need to improve the forming accuracy of the first and second resin members for reducing the defect. Therefore, the manufacturing cost is not increased. Further, it is no need to increase the applying pressure to squish the clearance completely in the welding process. Thus, a defect caused by the large applying pressure is prevented from being generated in the resin mold after welding. Here, a small pressure for inserting the filling member into the clearance may be applied as described later.

A resin mold according to the preferred embodiment of the present invention includes: a first resin member capable of transmitting a laser beam; a second resin member capable of absorbing the laser beam; and a filling member for filling a clearance between the first and second resin members. The laser beam works as a heat source. At least the first resin member and the second resin member are welded by the laser beam. In the resin mold, the clearance is filled with the filling member so that a defect such as a void is prevented from being generated.

The method for manufacturing a resin mold capable of filling a clearance is provided. Further, the resin mold without a defect such as a void is provided.

In the resin mold, a filling member may not have compatibility with both of the first resin member and the second resin member. The reason is that penetration of the air and penetration of the melted resin can be prevented only by filling the clearance with the filling member. Further, no defect such as a void is generated in the resin mold after welding. Here, the compatibility is such that two materials are melted and mixed each other.

Preferably, the filling member has the compatibility with at least one of the first resin member and the second resin member. In this case, the filling member and the first resin member or the filling member and the second resin member are welded. Thus, the bonding strength of a part of the interface, at which the clearance is disposed, is prevented from being reduced. To obtain the compatibility of the filling member, the filling member itself can be made of material having the compatibility with at least one of the first and second resin members. Further, the material having the compatibility can be added into the filling member.

Further, preferably, physical properties of the filling member are approximate to physical properties of at least one of the first and second resin members. For example, when a melting point of the filling member is approximate to a melting point of the one, it is easy to set a welding condition. When a linear coefficient of expansion of the filling member is approximate to a linear coefficient of expansion of the one, a defect caused by a thermal stress is prevented from forming at the interface after welding.

Although the filling member has a single layered construction, the filling member can have a multi-layered construction. In this case, the filling member includes a layer disposed on the first resin member side and having the compatibility with the first resin member or having physical properties approximate to those of the first resin member; and another layer disposed on the second resin member side and having the compatibility with the second resin member or having physical properties approximate to those of the second resin member.

Further, the filling member can be capable transmitting a laser beam. In this case, the heat conducts from the second resin member, which absorbs the energy of the laser beam, to the filling member and the first resin member. Furthermore, the filling member can be capable of absorbing the laser beam. In this case, the heat conducts from the filling member to the first resin member and the second resin member.

Here, the material of the filling member is not limited particularly. Preferably, the material of the filling member is a fluidized material so that the filling member disposed between the first and second resin members is fluidized to fill the clearance therebetween. The fluidized material can be liquid or gel. The fluidized material can be applied or sprayed on at least one of the bottom of the first resin member and the top of the second resin member so that the fluidized material is inserted between the first and second resin members in a case where the laser beam is irradiated from the top of the first resin member. Further, after the first and second resin members are attached, the fluidized material is injected into the interface between the first and second resin members by an injector so that the fluidized material is inserted between the first and second resin members. Further, after the fluidized material is inserted, the pressure can be applied to the resin members. In this case, the fluidized material is diffused along with the interface between the resin members. Therefore, the filling member can fill into the clearance sufficiently, the clearance which is disposed dispersively between the resin members. Although the filling member is diffused by applying the pressure, the filling member can be diffused by the first resin member's own weight.

The fluidized material is, for example, a gel including a resin material having physical properties approximate to both physical properties of the first and second resin members or having physical properties approximate to physical properties of at least one of the first and second resin members. The reason is that, in this case, the fluidized material has the compatibility with at least one of the first and second resin members.

Further, preferably, the filling member is a buffer material so that the filling member is deformed elastically or visco-elastically between the first and second resin members to fill the clearance therebetween. The buffer material is sandwiched between the first and second resin members so that the buffer material is inserted between the resin members. Further, after the buffer material is inserted, the pressure can be applied to the resin members. In this case, the buffer material can fill into the clearance deeply and sufficiently. Although the buffer material is pressurized with the applying pressure, the buffer material can be pressurized with the first resin member's own weight.

The buffer material is, for example, rubber such as elastomer. This is because the rubber works as not only the buffer material but also a releasing material for releasing a thermal stress at the interface after welding.

The materials of the first and second resin members are not limited particularly. For example, they are thermoplastic resin such as PP (i.e., poly propylene), PC (i.e., poly carbonate), ABS (i.e., acrylonitrile-butadiene styrene polymer), PBT (i.e., poly butylenes terephthalate), and PPS (i.e., poly phenylene sulfide). Here, the resin members can include several artificial colors, reinforcing agent or the like, appropriately.

A sort of the laser beam is not limited particularly as long as the laser beam has a certain wavelength for transmitting the first resin member. For example, the laser equipment is a semiconductor laser, Nd:YAG laser, glass-neodymium laser, ruby laser, hydrogen laser or the like. It is preferred that the laser equipment is the semiconductor laser, which has high energy conversion efficiency and has small equipment accommodation space. Further, a laser beam power, an irradiation density, a scanning speed in case of scanning and welding, and an irradiation time in case of spot welding are not limited particularly. They can be determined appropriately in view of a cycle time of manufacturing the resin mold and the like. Furthermore, a manner of the laser welding method is not limited particularly. Every manner of the laser welding method such as a butt welding method and an overlap welding method can be available.

The filling member may not be disposed on all areas of the interface between the first and second resin members. For example, in a case where the clearance is disposed dispersively and dotted at the interface between the resin members before welding, the filling member can be disposed dispersively and dotted at the interface after welding. To confirm the existence of the filling member, for example, the resin mold is cut in a vertical direction perpendicular to the interface so that the cross section is observed with a microscope. Instead, a sample of the interface is obtained from the cross section so that the components of the sample are analyzed by several analyzers.

The resin mold and the method for manufacturing the resin mold are described in detail as follows. The method for manufacturing the resin mold includes a part mounting process and a laser beam irradiation process.

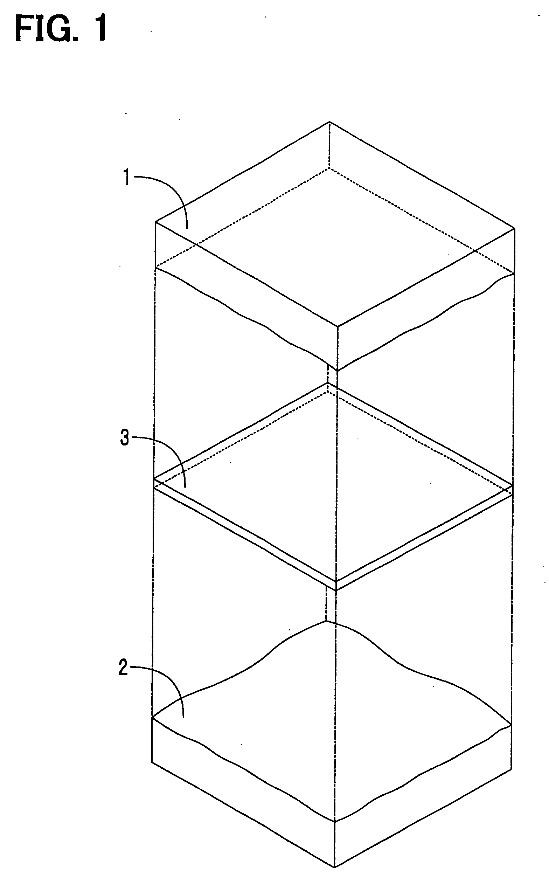

Firstly, the part mounting process is described. Fig. 1 is a schematic view explaining the pert mounting process according to the preferred embodiment. The first resin member 1 is a plate formed from PP by an injection molding method. The first resin member 1 is capable of transmitting a laser beam. The second resin member 2 is a plate formed from PP by an injection molding method. Therefore, the first resin member 1 and the second resin member 2 have compatibility each other. A carbon is added appropriately into the second resin member 2 so that the second resin member 2 is capable of absorbing the laser beam. A buffer member 3 is a plate having elasticity. The buffer member 3 is capable of transmitting the laser beam. Further, the buffer member 3 has compatibility with the first and second resin members 1, 2, respectively.

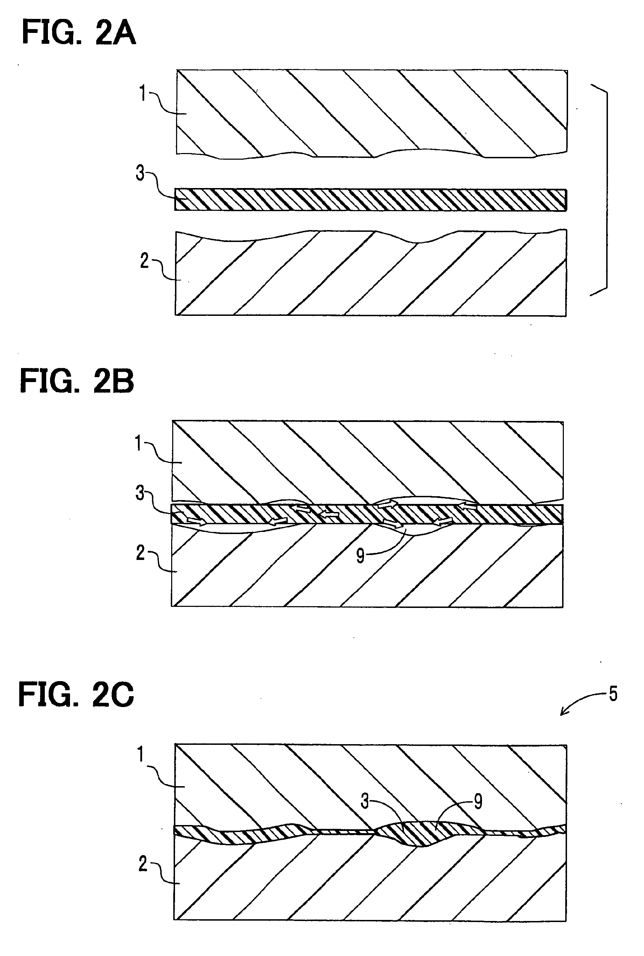

Fig. 2 is a schematic cross sectional view showing each member 1, 2, 3 in the part mounting process. In the part mounting process, firstly, the buffer member 3 is mounted on the second resin member 2, and the first resin member 1 is mounted on the buffer member 3, respectively, as shown in Fig. 2A. Then, as shown in Fig. 2B, the pressure is applied from the upside of the first resin member 1. As shown by a small outline arrow in Fig. 2B, the clearance 9 disposed between the first resin member 1 and the second resin member 2 is filled with the deformed buffer member 3 by the applied pressure. Thus, as shown in Fig. 2C, an intermediate 5 before welding is formed.

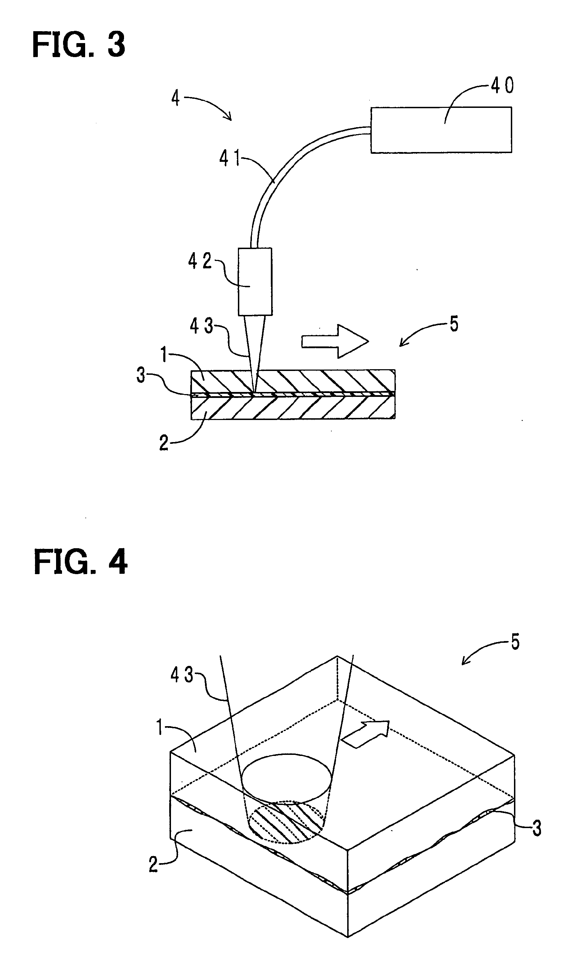

Next, the laser beam irradiation process is described. Fig. 3 is a schematic view showing laser equipment for using in the laser beam irradiation process. The laser equipment 4 includes a laser beam generation unit 40, an optical fiber 41 and a condenser lens 42. The laser beam generation unit 40 generates the semiconductor laser beam. The laser beam 43 is irradiated on the intermediate 5 from the first resin member 1 side. The laser beam 43 is scanned in a direction shown by an outline arrow in Fig. 3.

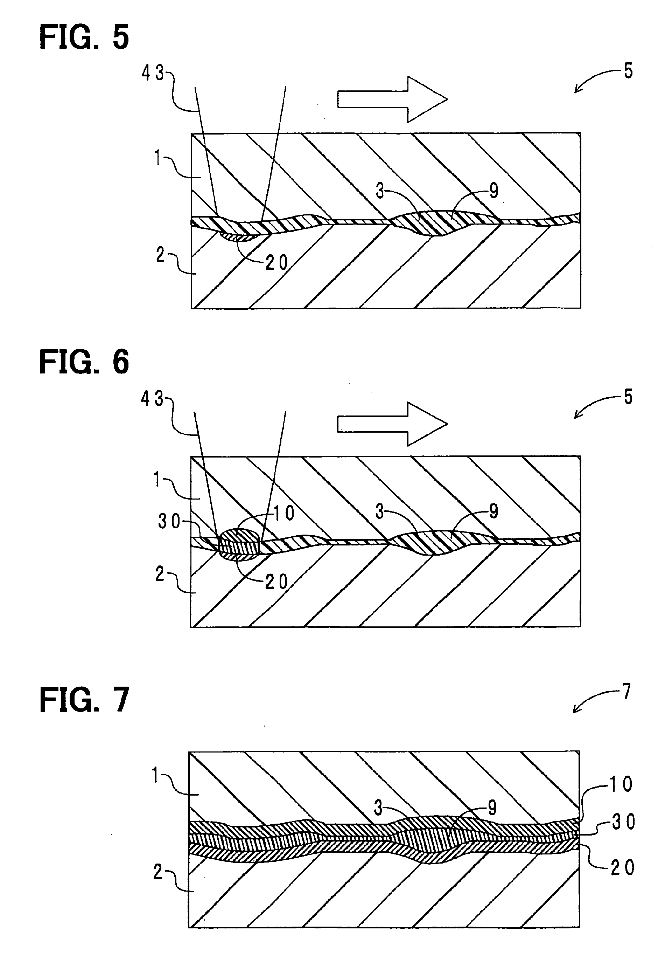

Fig. 4 is a schematic view showing a portion, which is irradiated with the laser beam. The laser beam 43 transmits the first resin member 1 and the buffer member 3, and reaches the surface of the second resin member 2. Fig. 5 is a schematic cross sectional view showing the intermediate 5 in the scanning direction before welding. When the laser beam 43 reaches the surface of the second resin member 2, the laser beam 43 is absorbed in the second resin member 2 so that a portion near the surface of the second resin member 2 generates heat and the portion is melted. Thus, a melt region 20 as the second melt region 20 is formed near the surface of the second resin member 2. Fig. 6 is a schematic cross sectional view showing the intermediate 5 in the scanning direction after welding. The heat generated in the second resin member 2 conducts the buffer member 3, which fills into the clearance 9. The buffer member 3 is also melted by the heat. Thus, another melt region 30 as the third melt region 30 is formed in the buffer member 3. Further, the heat is conducted from the buffer member 3 to the first resin member 1. The first resin member 1 is also melted by the heat. Thus, further another melt region 10 as the first melt region 10 is formed in the first resin member 1.

Fig. 7 is a schematic cross sectional view showing the resin mold 7. By scanning the laser beam, above described laser beam absorption, heat generation and heat conduction are performed in turn. Thus, the resin mold 7 having the cross section shown in Fig. 7 is obtained. The second melt region 20, the third melt region 30 and the first melt region 10 are mixed closely together; and then, they are cooled and solidified (not shown) . Thus, the high bonding strength is obtained. Further, the clearance 9 is filled in the part mounting process. Therefore, in the part mounting process, no air penetrates into the clearance 9 from the outside. Furthermore, the melted and expanded resin does not penetrate into the clearance 9. Accordingly, no defect such as a void is generated in the completed resin mold 7.

Such changes and modifications are to be understood as being within the scope of the present invention as defined by the appended claims.

## Claims

1. A method for manufacturing a resin mold, the method comprising the steps of:
laminating a second resin member (2), a filling member (3) and a first resin member (1) in this order, wherein the first resin member (1) is capable of transmitting a laser beam (43), wherein the laser beam (43) works as a heat source, wherein the second resin member (2) is capable of absorbing the laser beam (43), and wherein the filling member (3) fills a clearance (9) between the first and second resin members (1, 2) when the first and second resin members (1, 2) are attached; and
irradiating with the laser beam (43) from a first resin member (1) side so that the first resin member (1) and the second resin member (2) are welded.

2. The method according to claim 1,
wherein the filling member (3) has compatibility with at least one of the first resin member (1) and the second resin member (2).

3. The method according to claim 1 or 2,
wherein the filling member (3) has physical properties, which is similar to physical properties of at least one of the first resin member (1) and the second resin member (2).

4. The method according to any one of claims 1-3,
wherein the filling member (3) disposed between the first and second resin members (1, 2) is fluidized so that the filling member (3) fills the clearance (9).

5. The method according to any one of claims 1-3,
wherein the filling member (3) as a buffer material is deformed elastically or visco-elastically in the clearance (9) between the first and second resin members (1, 2) so that the filling member (3) fills the clearance (9).

6. The method according to any one of claims 1-5,
wherein at least one of the first and second resin members (1, 2) is made of thermoplastic resin.

7. The method according to claim 6,
wherein the thermoplastic resin is poly propylene, poly carbonate, acrylonitrile-butadiene styrene polymer, poly butylenes terephthalate, or poly phenylene sulfide.

8. The method according to any one of claims 1-7,
wherein the filling member (3) includes a first filling member (3) and a second filling member (3),
wherein the second resin member (2), the second filling member (3), first filling member (3) and the first resin member (1) are laminated in this order,
wherein the second filling member (3) has compatibility with the second resin member (2) or has physical properties similar to those of the second resin member (2), and
wherein the first filling member (3) has compatibility with the first resin member (1) or has physical properties similar to those of the first resin member (1).

9. The method according to any one of claims 1-8,
wherein the laser beam (43) is emitted by a semiconductor laser, a Nd:YAG laser, a glass-neodymium laser, a ruby laser, or a hydrogen laser.

10. A resin mold comprising:
a first resin member (1) capable of transmitting a laser beam (43), wherein the laser beam (43) works as a heat source;
a second resin member (2) capable of absorbing the laser beam (43); and
a filling member (3) for filling a clearance (9) between the first and second resin members (1, 2),
wherein the first resin member (1) and the second resin member (2) are capable of welding by the laser beam (43).

11. The resin mold according to claim 10,
wherein the filling member (3) has compatibility with at least one of the first resin member (1) and the second resin member (2).

12. The resin mold according to claim 10 or 11,
wherein the filling member (3) has physical properties, which is similar to physical properties of at least one of the first resin member (1) and the second resin member (2).

13. The resin mold according to any one of claims 10-12,
wherein the filling member (3) is capable of being fluidized so that the filling member (3) fills the clearance (9).

14. The resin mold according to any one of claims 10-13,
wherein the filling member (3) has elasticity or visco-elasticity so that the filling member (3) fills the clearance (9).

15. The resin mold according to any one of claims 10-14,
wherein at least one of the first and second resin members (1, 2) is made of thermoplastic resin.

16. The resin mold according to claim 15,
wherein the thermoplastic resin is poly propylene, poly carbonate, acrylonitrile-butadiene styrene polymer, poly butylenes terephthalate, or poly phenylene sulfide.

17. The resin mold according to any one of claims 10-16,
wherein the filling member (3) includes a first filling member (3) and a second filling member (3),
wherein the second resin member (2), the second filling member (3), first filling member (3) and the first resin member (1) are disposed in this order,
wherein the second filling member (3) has compatibility with the second resin member (2) or has physical properties similar to those of the second resin member (2), and
wherein the first filling member (3) has compatibility with the first resin member (1) or has physical properties similar to those of the first resin member (1).
